## Europäisches Patentamt

## European Patent Office

## Office européen des brevets

(11) Publication number: **0 068 293**
**B1**

(12) **EUROPEAN PATENT SPECIFICATION**

(45) Date of publication of patent specification: **28.08.85**

(21) Application number: **82105252.9**

(22) Date of filing: **16.06.82**

(51) Int. Cl.⁴: **A 01 N 57/12,** A 01 N 65/00, A 01 N 57/16, A 01 N 57/14 // (A01N57/16, 57:14, 57:14, 57:12, 57:12, 47:12, 57:12, 43:88, 57:12, 29:02)

(54) **A new nematocidal composition, processes for its production and its use.**

(30) Priority: **27.06.81 DE 3125447**

(43) Date of publication of application:
**05.01.83 Bulletin 83/01**

(45) Publication of the grant of the patent:
**28.08.85 Bulletin 85/35**

(84) Designated Contracting States:
**AT BE CH DE FR GB IT LI LU NL SE**

(56) References cited:
**US-A-1 938 864**
**US-A-2 006 227**
**US-A-4 007 258**

**The file contains technical information submitted after the application was filed and not included in this specification**

(73) Proprietor: **A. Nattermann & Cie. GmbH**
**Nattermannallee 1**
**D-5000 Köln 30 (DE)**

(72) Inventor: **Ghyczy, Miklo, Dipl.-Chem., Dr.**
**Am Serviesberg 12**
**D-5000 Köln 41 (DE)**
Inventor: **Osthoff, Heinrich, Dr.**
**Rondorfer Strasse 51**
**D-5030 Hürth (DE)**
Inventor: **Etschenberg, Eugen, Dr.**
**Hirseweg 10**
**D-5000 Köln 41 (DE)**

(74) Representative: **Redies, Bernd, Dr. rer. nat. et al**
**Redies, Redies, Türk & Gille, Patentanwälte**
**Brucknerstrasse 20**
**D-4000 Düsseldorf 13 (DE)**

Courier Press, Leamington Spa, England.

# 0 068 293

**Description**

This invention relates to a new nematocidal composition, to processes for its production and to its use.

The need to use chemical preparations for controlling nematodes (nematocides) has increased over recent years. With numerous cultivated plants, particularly in warmer climates, it would not be possible today to obtain sufficient yields without controlling nematodes. The main group of phytopathogenic nematodes is the group of root parasites. Since they can only be controlled through the roots or through the soil, large quantities of nematocides are required in every case and, because they only reach the affected parts of the plants in inadequate quantities, can result in serious pollution of the environment.

It has now surprisingly been found that the quantity of nematocides per hectare of cultivated area required for controlling nematodes can be reduced by up to 40—60% and, in some cases, by up to 80% providing the nematocide or nematocide mixture is used together with one or more de-oiled natural phospholipid products soluble in ethanol consisting of either 25 to 96% of phosphatidyl choline, or 96% of hydrogenated phosphatidyl choline and 25 to 0% of phosphatidyl ethanolamine, 20 to 0% of phosphatidyl inositol and the difference to 100% of one or several of N-acyl phosphatidyl ethanolamines, phosphatidyl serine, phosphatidyl glycerol and lysolecithin in a ratio by weight of a:b from 1:0.5 to 1:10 in addition to standard vehicles, diluents, solvents, propellents and/or other inert auxiliaries. In addition to greater economy of the treatment, the uptake of the nematocides by the plants through the roots is considerably increased by the addition of the phospholipides, so that a favourable long-lasting effect is obtained. The better uptake of the nematocides by the plants prevents contamination of the soil by the nematocides. Finally, the phospholipides are generally natural and, in every case, non-toxic products which, by virtue of their nature and properties, do not themselves cause pollution of the environment. To produce the new nematocidal compositions, the nematocides are mixed with one or more phospholipides in a ratio by weight of from 1:0.5 to 1:10 and, particularly, in a ratio by weight of from 1:1 to 1:5.

Suitable phospholipides are the commercially available phosphatidyl cholines or phosphatidyl choline mixtures such as, for example,

Phospholipon$^R$25

(25% of phosphatidyl choline, 25% of phosphatidyl ethanolamine, 20% of phosphatidyl inositol and the remaining 30% being composed of glycolipids, phosphatidic acids, lysophospholipids (such as lysolecithin), sugar and small amount of oil)

Phospholipin$^R$55

(55% of phosphatidyl choline, 25% of phosphatidyl ethanolamine, 2% of phosphatidyl inositol and the remaining 18% being composed of glycolipids, phosphatidic acids, lyosphospholipids (such as lysolecithin), sugar and small amount of oil)

Phospholipon$^R$80

(80% of phosphatidyl choline, 10% of phosphatidyl ethanolamine, 2,5% of lysophosphatidyl choline (lysolecithin) and the remaining 7,5% being composed of other, naturally occurring phospholipids such as lysophosphatidyl ethanolamine, phosphatidyl inositol)

Phospholipon$^R$100

(96% of phosphatidyl choline, ≤3% of lysophosphatidyl choline (lysolecithin) ≤1% soybean oil)

Phospholipon$^R$100H

(96% of hydrogenated phosphatidyl choline, ≤3% of lysophosphatidyl choline (lysolecithin) ≤1% soybean oil)

Phospholipon$^R$38

(38% of phosphatidyl choline, 16% of N-acetyl phosphatidyl ethanolamine and 4% of phosphatidyl ethanolamine).

It is particularly preferred to use natural phosphatidyl cholines which may be obtained by the processes described in the following patents: DE—PS No. 1,047,597, DE—PS No. 1,053,299, DE—PS No. 1,617,679, DE—PS No. 1,617,680, German Patent Applications DE—OS No. 30 47 048, DE—OS No. 30 47 012 or DE—OS No. 30 47 011.

In these processes, for instance soybeans are extracted with a lower aliphatic alcohol, in particular with 94 to 96% ethanol, which is filtered. The clear solution may be evaporated and is redissolved in a lower aliphatic alcohol which may contain 20% water. This solution is subjected to column chromatography on silicic acid gel at an elevated temperature which is 60 to 90°C if highly concentrated phosphatidyl choline is desired and which is elevated to temperatures below 60°C, if a product is desired which is to contain varying amounts of phosphatidyl ethanolamine. In the latter case the soybean material is at first de-oiled by known processes, for instance in an acetone solution with subsequent extraction in ethanol or by chromatography purification over aluminium oxide in ethanol (DE—PS 1 047 517, 1 053 299, 1 617 679 or 1 617 680).

2

Suitable N-acyl phosphatidyl ethanolamines are in particular those in which the acyl group emanates from saturated or olefinically unsaturated fatty acids containing from 2 to 20 carbon atoms, particularly from saturated fatty acids containing from 2 to 5 carbon atoms or saturated or mono-olefinically unsaturated fatty acids containing 14, 16, 18 or 20 carbon atoms.

The nematocide used may be virtually any nematocide such as, for example,

O-(2,4-dichlorophenyl)-O,O-diethyl thiophosphate (dichlofenthion) thiophosphoric acid-O,O-diethyl-O-2-pyrazinyl ester (zinophos) O,O-diethyl-O-(4-methyl-sulfinyl-phenyl)-thionophosphoric-acid ester (fensulfothion)

2-methyl-2-(methylthio)-propionaldehyde-o-(methylcarbonyl)-oxime (aldicarb)

3,5-dimethyl-1,3,5-2H-tetrahydrothiadiazine-2-thione(dazomet)dichlorpropen (a mixture of dichloropropane and dichloropropene).

The individual nematocides may be used either on their own or in combination with other nematocides or, if desired, even with herbicides or acaricides following the addition of the phospholipides.

The new nematocide/phospholipide compositions may be used for example for controlling the following nematodes: free-living root nematodes such as, for example, Pratylenchus-, Rotylenchus-, Tylenchorhynchus-, Trichodorus-, Longidorus-, Xiphinema species, above all on roots of creal crops, beet crops, potatoes, vegetables, carrots, orchards, banana plantations, coffee or tea plantations; root bale nematodes such as, for example, Meloidogyne species, above all in tobacco, cotton, vegetables and ornamental plants; cystic nematodes, for example Heterodera species, in potatoes, oats, hops, clover, vegetables etc.; stem nematodes, particularly Ditylenchus species, in rye, tobacco, beet crops, onions, corn, oats, clover, ornamental plants; and leaf nematodes, particularly Aphelenchoides species, mainly in rice, cocoa, strawberries and ornamental plants.

The new nematocidal compositions may be prepared in the following manner:

The phospholipide or phospholipides is/are dissolved in organic solvents, such as for example toluene, xylene, ethyl acetate, ethanol or methanol or mixtures of these solvents. The choice of the solvent or solvent mixture will depend upon the solubility of the nematocide used. The nematocide or the commercial product containing the nematocide is dissolved in the phospholipide solution, optionally by heating. On completion of dissolution, the solvent is removed by heating *in vacuo*. The product thus obtained is converted into a suitable, standard commercial form by the addition of any suitable auxiliaries still necessary, such as for example fillers, vehicles, diluents, wetting agents, stabilisers, gelating agents and extenders.

The new nematocidal compositions may also be prepared by mixing the nematocides or the commercial product containing the nematocides with the phospholipide(s) and any auxiliaries and fillers which may still be necessary, dissolving or suspending the resulting mixture in an organic solvent and subsequently removing the solvent. A mixture ready for use is obtained in this way.

In the case of nematocides which are soluble in water or in water/alcohol mixtures, the nematocide is with advantage first dissolved in water or water/alcohol mixtures and the phospholipide or phospholipide mixtures are converted into a solution or emulsion by stirring or by the application of ultrasonic waves. The emulsifiers normally required may be added before or after this stirring operation. The emulsion or solution thus obtained is freed from the solvent mixture or water in the usual way, for example by distillation, spray-drying or freeze-drying. The resulting product may then be used either as such or, if desired, in conjunction with suitable auxiliaries. The product may even be re-emulsified or re-dissolved in water and used as a spray preparation.

Suitable vehicles are, for example, talcum, kaolin, bentonite, kieselguhr, lime or crushed rock. Examples of further auxiliaries are surface-active compounds, such as soaps (fatty acid salts), fatty alcohol sulfonates or alkyl sulfonates. Gelatin, casein, albumin, starch or methyl cellulose may be used as stabilisers or protective colloids.

The new nematocidal compositions may be used in liquid or solid form, for example in the form of dusting powders, granulates, sprays, aerosols, emulsions or solutions.

Example 1

Production of 1 kg of a dusting powder effective against migrating root nematodes in ornamental plants and containing aldicarb as its active ingredient:

50 g of aldicarb, 120 g of Phospholipon 25 and 0.1 g of ascorbic palmitate are dissolved at 30 to 35°C in 500 ml of toluene. The resulting solution is kneaded with 804 g of $CaCO_3$ (quality: precipitated calcium carbonate) and the resulting paste is dried and ground. The powder is 1) dissolved with 15.0 g of lignin sulfonate in water and 2) mixed with 100 ml of a 10% gelatin solution. The pellets obtained are dried to form a powder in a fluidised-bed dryer.

The product thus obtained is equivalent in its nematocidal activity to the commercial product containing 10% of aldicarb.

Example 2

Production of 1 kg of an emulsion spray effective against leaf and stem eelworms in ornamental plants and containing zinophos as its active ingredient:

# 0 068 293

240 g of zinophos, 240 g of Phospholipon 80 dissolved in 50 ml of ethanol, 5 g of Tagat® O and 5 g of Tegomuls® O are made up to 1 litre with Shellsol® and dissolved.

This mixture is used in the form of a 0.1% emulsion in water. It is equivalent in its effect to the same quantity of a 48% zinophos solution.

## Example 3

Production of a granular dusting preparation containing fensulfothion as its active ingredient:

50 g of fensulfothion and 100 g of Phospolipon 55 dissolved in 50 ml of ethanol are dissolved in 300 ml of Shellsol A® and the resulting solution sprayed homogeneously onto 825 g of $CaCO_3$ (precipitated). The product is dried and ground. The powder is 1) dissolved with 15 g of lignin sulfonate in water and 2) stirred with 100 ml of a 10% gelatin solution and the pellets formed are dried in a fluidised-bed granulator.

## Example 4

Production of 1 kg of an emulsion concentrate containing dichlofenthion as its active ingredient:

200 g of dichlofenthion, 200 g of phospholipon 80 in 50 ml of ethanol, 10 g of Marlowet IHF® and 10 g of Cellosolve® are made up to 1 litre with shellsol A.

The resulting 20% solution of dichlofenthion is equivalent in its effect to 0.5 litre of an 80% commercial product.

In the following Application Examples, the commercial products containing the active ingredient referred to by its generic name were used as the active substance.

## Example 5

Comparison test with dichlorpropen

To control potato nematodes, an infested field was sprayed with various mixtures and the percentage of potato plants still affected after the treatment was determined.

| Test number | Mixture | | Nematode infestation in % |
|---|---|---|---|
| 1 | dichlorpropen | 45 ml/m² | 10 |
| 2 | dichlorpropen | 22.5 ml/m² | 80 |
| 3 | dichlorpropen +phosphatidyl choline | 22.5 ml/m² 90 mg/l | 10 |
| 4 | dichlorpropen +phosphatidyl choline | 11.75 mg/l 90 mg/l | 80 |

## Example 6

Comparison test with dazomet

For controlling seedling and wilting diseases and also germinating weed seeds and nematodes, compost soils are mixed with Basamid granulate and the percentage of germinating weed seeds and the infestation of sown common cabbage with Phoma lingam and nematodes are determined.

| Test number | Mixture | | % Weed infestation | % Phoma lingam infestation | % Nematodes infestation |
|---|---|---|---|---|---|
| 1 | dazomet | 40 g/m² | 0 | 0 | 10 |
| 2 | dazomet | 20 g/m² | 40 | 20 | 80 |
| 3 | dazomet +phosphatidyl choline | 20 g/m² 90 mg/l | 0 | 0 | 10 |
| 4 | dazomet +phosphatidyl choline | 20 g/m² 45 mg/l | 0 | 5 | 20 |

4

**Claims**

1. Phosphatide containing nematocidal composition, characterized in that it consists of
   a) one or more nematocidally active substances and
   b) one or more de-oiled natural phospholipid products soluble in ethanol consisting of 25 to 96% of phosphatidyl choline or 96% of hydrogenated phosphatidyl choline and 25 to 0% of phosphatidyl ethanolamine, 20 to 0% of phosphatidyl inositol and the difference to 100% of one or several of N-acyl phosphatidyl ethanolamines, phosphatidyl serine, phosphatidyl glycerol and lysolecithin in a ratio by weight of a:b from 1:0.5 to 1:10 in addition to standard vehicles, diluents, solvents, propellants and/or other inert auxiliaries.

2. A nematocidal composition as claimed in Claim 1, characterised in that constituents a) and b) are present in a ratio by weight of from 1:1 to 1:5.

3. A nematocidal composition as claimed in Claims 1 to 2, characterised in that phosphatidyl choline is used as the phospholipide.

4. A nematocidal composition as claimed in one or more of Claims 1 to 3, characterised in that dichlofenthion, zinophos, fensulfothion, aldicarb, dazomet and/or dichlorpropen is/are used as the nematocide.

5. The use of the composition claimed in any of Claims 1 to 4, for controlling nematodes.

6. A process for producing the nematocidal compositions claimed in one or more of Claims 1 to 4, characterised in that the phospholipide is dissolved in an organic solvent or solvent mixture and the nematocide is dissolved in the resulting solution, optionally by heating and/or stirring, after which the solvent or solvent mixture is removed *in vacuo* and the mixture obtained is converted into a standard formulation using standard fillers and auxiliaries.

7. A process for producing the nematocidal compositions claimed in one or more of Claims 1 to 4, characterised in that the nematocide(s) is dissolved or suspended in an organic solvent together with one or more phospholipides and optionally together with standard fillers and auxiliaries, after which the solvent is removed.

8. A process for producing the nematocidal compositions claimed in one or more of Claims 1 to 4, characterised in that one or more water-soluble or alcohol-soluble nematocides is/are dissolved with one or more phospholipides either in water or in water/alcohol mixtures by stirring and/or gentle heating and/or by the application of ultrasonic waves, after which the solvent or solvent mixture is removed.

**Patentansprüche**

1. Phosphatid-haltige Nematizid-Zusammensetzung, dadurch gekennzeichnet, daß sie aus
   a) einem oder mehreren Nematizid-Wirkstoffen und
   b) einem oder mehreren entölten, in Ethanol löslichen, natürlichen Phospholipid-Produkten bestehend aus entweder 25 bis 96% Phosphatidylcholin oder 96% hydriertem Phosphatidylcholin und 25 bis 0% Phosphatidylethanolamin, 20 bis 0% Phosphatidylinosat und der Differenz zu 100% aus einem oder mehreren von N-Acylphosphaditylethanolamin, Phosphatidylserin, Phosphatidylglycerin und Lysolecithin im Gewichtsverhältnis a:b von 1:0,5 bis 1:10 neben üblichen Träger-, Verdünnungs-, Lösungs-, Versprühungs- und/oder anderen inerten Hilfsmitteln besteht.

2. Nematizid-Zusammensetzung gemäß Anspruch 1, dadurch gekennzeichnet, daß die Bestandteile a) und b) im Gewichtsverhältnis 1:1 bis 1:5 vorliegen.

3. Nematizid-Zusammensetzung gemäß Anspruch 1 oder 2, dadurch gekennzeichnet, daß als Phospholipid Phosphoidylcholin engesetzt wird.

4. Nematizid-Zusammensetzung gemäß einem oder mehreren der Ansprüche 1 bis 3, dadurch gekennzeichnet, daß als Nematozid Dichlofenthion, Zinophos, Fensulfothio, Aldicarb, Dazomet und/oder Dichlorpropen eingesetzt wird.

5. Verwendung der Zusammensetzung gemäß einem der Ansprüche 1 bis 4 zur Bekämpfung von Nematoden.

6. Verfahren zur Herstellung von Nematizid-Zusammensetzungen gemäß einem oder mehreren der Ansprüche 1 bis 4, dadurch gekennzeichnet, daß das Phospholipid in einem organischen Lösungsmittel bzw. Lösungsmittelgemisch gelöst wird und in diese Lösung ggfs. durch Erwärmen und/oder Rühren das Nematizid gelöst und anschließend das Lösungsmittel oder Lösungsmittelgemisch im Vakuum abgezogen wird und die erhaltene Mischung unter Zusatz üblicher Füll- und Hilfsmittel in eine übliche Anwendungsform überführt wird.

7. Verfahren zur Herstellung von Nematizid-Zusammensetzungen gemäß einem oder mehreren der Ansprüche 1 bis 4, dadurch gekennzeichnet, daß das oder die Nematizide mit einem oder mehreren Phospholipiden ggfs. unter Zusatz üblicher Füll- und Hilfsmittel in einem organischen Lösungsmittel gelöst bzw. aufgeschlämmt und das Lösungsmittel danach abgezogen wird.

8. Verfahren zur Herstellung von Nematizid-Zusammensetzungen gemäß einem oder mehreren der Ansprüche 1 bis 4, dadurch gekennzeichnet, daß ein oder mehrere, in Wasser oder Alkohol lösliche Nematizide in Wasser oder Wasser-Alkohol-Mischungen zusammen mit einem oder mehreren

**0 068 293**

Phospholipiden unter Rühren und/oder leichter Erwärmung, und/oder Ultraschall gelöst und das Lösungsmittel bzw. Lösungsmittelgemisch abgezogen wird.

**Revendications**

1. Composition nématicide contenant un phosphatide, caractérisée en ce qu'elle est constituée de
a) une ou plusieurs substances nématicides actives et
b) un ou plusieurs produits phosphatidyliques naturels déshuilés solubles dans l'éthanol, constitués de 25 à 96% de phosphatidyl choline ou de 96% de phosphatidyl choline hydrogénée et 25 à 0% de phosphatidyl éthanolamine, 20 à 0% de phosphatidyl inositol et le complément à 100% d'un ou plusieurs composés choisis parmi les N-acyl phosphatidyl éthanolamines, la phosphatidyl sérine, le phosphatidyl glycérol et la lysolécithine, dans un rapport pondéral de a/b de 1/0,5 à 1/10 en plus de véhicules, diluants, solvants, propulseurs et/ou autres auxiliaires inertes standards.

2. Une composition nématicide comme revendiqué dans la revendication 1, caractérisée en ce que les constituants a) et b) sont présents dans un rapport pondéral de 1/1 à 1/5.

3. Une composition nématicide comme revendiqué dans les revendications 1 et 2, caractérisée en ce que la phosphatidyl choline est utilisée comme phospholipide.

4. Une composition nématicide comme revendiqué dans une ou plusieurs des revendications 1 à 3, caractérisée en ce que le dichlofenthion, le zinophos, le fensulfothio, l'aldicarb, le dazomet et/ou le dichlorpropen est/sont utilisé(s) comme nématicide.

5. L'emploi de la composition revendiquée dans l'une quelconque des revendications 1 à 4, pour la lutte contre les nématodes.

6. Un procédé pour produire les compositions nématicides revendiquées dans une ou plusieurs des revendications 1 à 4, caractérisé en ce que le phospholipide est dissous dans un solvant organique ou un mélange solvant et le nématicide est dissous dans la solution obtenue, éventuellement par chauffage et/ou agitation, après quoi le solvant ou le mélange solvant est chassé *sous vide* et le mélange obtenu est transformé en une composition standard par emploi de charges et d'auxiliaires standards.

7. Un procédé pour la production des compositions nématicides revendiquées dans une ou plusieurs des revendications 1 à 4, caractérisé en ce que le(s) nématicide(s) est(sont) dissous ou mis en suspension dans un solvant organique avec un ou plusieurs phospholipides et éventuellement avec des charges et auxiliaires standards, après quoi le solvant est chassé.

8. Un procédé pour la production des compositions nématicides revendiquées dans une ou plusieurs des revendications 1 à 4, caractérisé en ce qu'un ou plusieurs nématicides soluble(s) dans l'eau ou soluble(s) dans l'alcool est/sont dissous avec un ou plusieurs phospholipides, soit dans l'eau, soit dans des mélanges d'eau et d'alcool par agitation et/ou chauffage modéré et/ou par application d'ondes ultrasonores, après quoi le solvant ou le mélange solvant est éliminé.